# EUROPEAN PATENT APPLICATION

(11) **EP 1 820 742 A1**
(43) Date of publication of application: **22.08.2007**
(21) Application number: 06007952.2
(22) Date of filing: 18.04.2006
(51) Int. Cl.: B65D 5/74

(54) **Shutoff device for packages of liquid products**

(30) Priority: 16.02.2006 LV 060026
(71) Applicant: Dzabrailova, Viktorija, Babite 2101 (LV); Dubovskij, Igor, Novokuznetsk 65400 (RU)
(72) Inventor: Dzabrailova, Viktorija, Babite 2101 (LV); Dubovskij, Igor, Novokuznetsk 65400 (RU)
(74) Representative: Dolgicere, Nina

(57) **Abstract**

The present invention relates to a shutoff device designed for capping of semi-rigid packages of Tetrapak type containing sterilized food products, for example, fruit juices and milk. The reusable shutoff devices comprises a base (1) connected integrally with the package by a supporting surface (4), and a tooth cutting member (8), a sleeve (2) connected with the base (1) by a threaded joint, and a cap (3) connected with the sleeve (2) by a splined joint. Between the supporting surface (4) and a cylindrical part (5) of the base (1) a flexible bridge is made, and the sleeve (2) has a pusher (14), which is acting on a weakened element (15) arranged at the bottom of the cap (3). The invention improves the visual demonstrativeness of the indication of the initial unsealing of the package and makes the package easy to use.

## Description

The present invention relates to threaded shutoff devices provided with means of uncapping indication and installed on packages of liquid products having partition broken upon uncapping of a package. The proposed threaded shutoff device is designed preferably for Tetrapak-type semi-rigid packages of juices, milk, etc.

It is known the reusable shutoff device for packages made of sheet material of Tetra Laval Holdings & Finance S.A. company (European Patent Application EP 1 533 240, Int.Cl⁷: B65D 5/74) taken as a prototype. The shutoff device fixed on a package casing above its breakable partition, having a base, in the cylindrical part of which, that is a pour opening, internal (right-handed) thread and external (left-handed) thread are made. The second element of the shutoff device is a cap that closes the pour opening at the end of the cylindrical part of the base; in the assembled condition of the shutoff device the cap is screwed on the cylindrical part of the base. The cap in its inner part has pins arranged in the axial direction. Inside the cylindrical part of the base on the threaded joint (left-handed thread) there is a sleeve movable in axial and angular direction, on the lower end ofwhich there are sharpened teeth. On the inner surface of the sleeve there are longitudinal ridges engaged with pins of the cap. Between the protruding shoulder on the base of the shutoff device and the cap there is a tear-off ring connected with the cap with breakable bridges.

Upon screwing the cap off the cylindrical part of the base (package uncapping) the ring is detached from the cap, while the radial movement of the ring is limited by the shoulder of the base. The detachment of the ring is indicative of package uncapping. Concurrently, along with the screwing off the cap the sleeve rotated by pins of the cap along left-handed thread of cylindrical part of the base moves towards to the breakable partition in the package wall and, rotating about the axis cuts the partition circumferentially off the package wall by its sharpened theeth.

The disadvantage of the known shutoff device is a poor demonstrativeness of the fact of the indication of the first uncapping of the package (tear-off ring after the break of the bridges is retained on the cylindrical part of the base), that does not provide proper visual indication of the breaking of integrity of a package. Furtheremore, the cap when screwing off is not structurally connected with the base of the shutoff device and may be lost during the pouring of the product in the package. Occasional spillage of liquid product during uncapping of the package upon slight squeezing of side wall of semi-rigid package is possible.

The object of the present invention is to improve the demonstrativeness of the indication of uncapping of the package and to make possible the multiple capping-uncapping of the package with no separation of the closing element (cap), and to prevent the possibility of occasional spillage of liquid product upon uncapping of the package.

This object is achieved by that in a shutoff device provided with the weakened element and consisting of the base, which is by its supporting surface attached above the partition of the package broken by tooth cutting member, the sleeve connected with the base by the threaded joint, and the cap connected with the sleeve by a splined joint, between the cylindrical part of the base and supporting surface, a flexible bridge is made. Tooth cutting member is arranged on the lower edge of the cylindrical part of the base, the sleeve has a cylindrical pusher, which is interacting by its end face with the weakened element, which is arranged at the bottom of the cap, while the inner edge of the cylindrical pusher together with conical element of the base form a valve couple "seat-closing element".

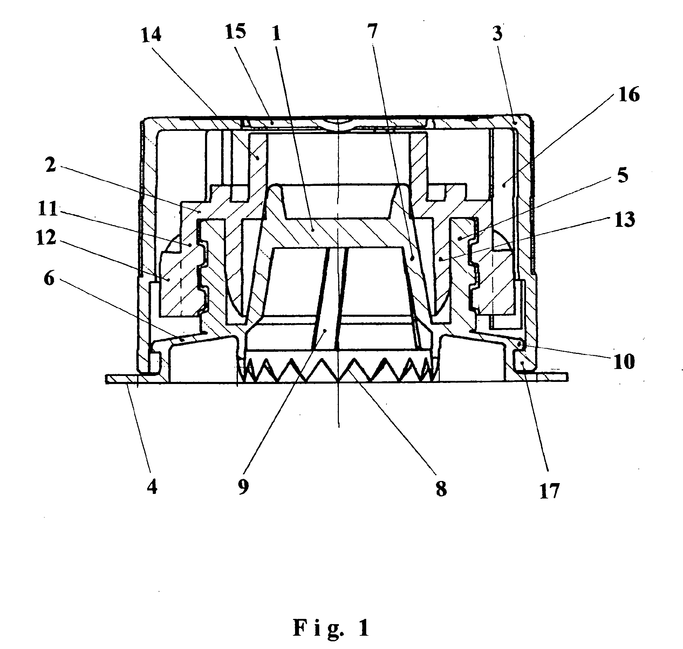

The essence of the invention is explained with reference to the drawing (fig.1), which shows the axial section of the shutoff device for packages.

The shutoff device comprises the base 1, the sleeve 2 and the cap 3. The base 1 is attached to the surface of the package (not shown in the drawing) by the supporting surface 4 over its breakable partition. The base 1 has the cylindrical part 5 with the thread on the outer surface connected with the supporting surface 4 by flexible bridge 6. The base 1 has also the conical part 7 and the tooth cutting member 8, connected with each other by inclined struts 9. At the lower part of the base 1 there is a circular shoulder 10.

The sleeve 2 has three cylindrical elements: the outer element 11 with the thread on its inner surface and radial splines between longitudinal ribs 12 on the outer surface, the tubular sealing element 13 and cylindrical pusher 14.

At the bottom of the cap 3 there is the weakened element 15, while on the inner surface there are radial ribs 16 and catches 17 in the lower part of the inner surface.

In the assembled condition of the shutoff device the sleeve 2 along the thread on the outer surface of the cylindrical part 5 is screwed on against the stop on the base 1. While the tubular sealing element 13 of the sleeve 2 together with the inner surface of the cylindrical part 5 forms a hermetic seal. The cap 3 upon the axial fitting on the base 1 by its radial ribs 16 goes into a splined joint with the radial splines between the ribs 12 on the outer surface of the sleeve 2, and the catches 17 latch beyond the circular shoulder 10 in the lower part of the base 1, forming a permanent joint thereof The shutoff device is bonded by the supporting surface 4 to the surface of the package over its breakable partition.

Upon unsealing of the package the cap 3 is rotated counterclockwise (the direction of rotation of the cap 3 is shown by the arrow at the outer side of the bottom). The catches 17 prevent the axial displacement of the cap 3 relative to the base 1. The radial ribs 16 of the cap 3 being in the splined joint with the radial ribs 12 on the outer surface of the sleeve 2, rotate it, at the result of which the sleeve 2 is displaced along the thread in axial direction relative to the base 1. At first the stop of the cylindrical pusher 14 against the bottom of the cap 3 provides the flexure of the flexible bridge 6 and the penetration of teeth of the cutting member 8 to the size of flexure of the bridge 6 into the breakable partition of the package and, thus, providing breaking of integrity. Then, upon further rotation of the cap 3 the pressure of the cylindrical pusher 14 upon the bottom of the cap 3 is increased, and bridges of the weakened element 15 are broken, and the element is removed. The detachment of the significant part of the cap is a visual evidence of the fact of unsealing of the package. With that the cylindrical pusher 14 comes out of the outer surface of the cap 3 extending the pour opening, while due the axial displacement of the sleeve relative to the base 1 the valve "seat-closing element" is opened (between the conical element 7 of the base 1 and the inner edge of the inner surface of the cylindrical pusher 14). After the weakened element 15 is broken the base 1 reassumes its original position under the action of a force of the flexible bridge 6, and the holes in the safety partition of the package are released from the teeth of the cutting member 8 with the formation of holes in it for liquid flowing. After the consumption of a beverage the valve "seat-closing element" safely closes a discharge channel of the shutoff device by counter-rotation of the cap.

As it follows from the description of the invention the proposed shutoff device for packages of liquid product provides proper visual indication of the breaking of integrity of a package, the possibility of the multiple capping and uncapping of the discharge channel of the shutoff device, and the formation of the discharge channel, which has an adequative resistance to liquid flowing (resistance of the holes in the breakable partition of the package, resistance of the passage in the valve and the discharge channel elongated by the extended cylindrical pusher 14), that prevents undesirable spillage of liquid upon the unsealing of filled semi-rigid package that may occur when the known shutoff devices are installed.

## Claims

1. A shutoff device for packages of liquid product provided with a weakened element and comprising a base, which is by its supporting surface attached above a partition of the package broken by a tooth cutting member, a sleeve connected with the cylindrical part of the base by a threaded joint, and a cap connected with the sleeve by a splined joint, **characterized in that** between a cylindrical part of the base and its supporting surface, a flexible bridge is made, tooth cutting member is arranged on a lower front edge of the cylindrical part of the base, the sleeve has a cylindrical pusher, which is interacting by its end face with the weakened element, which is arranged at the bottom of the cap.

2. A shutoff device according to claim 1, **characterized in that** its base is provided with a conical element, which forms with the inner edge of the cylindrical pusher of the base a valve couple "seat-closing element".

3. A shutoff device according to claim 1 or 2, **characterized in that** the sleeve is provided with a tubular sealing element, which together with the inner surface of the cylindrical part of the base forms a hermetic seal.
